# EUROPEAN PATENT SPECIFICATION

(11) **EP 1 262 334 B1**
(45) Date of publication and mention of the grant of the patent: **02.11.2005**
(21) Application number: 02250840.2
(22) Date of filing: 07.02.2002
(51) Int. Cl.: B60B 21/06, B60B 1/04

(54) **Bicycle wheel**
Fahrradrad
Roue de bicyclette

(30) Priority: 01.06.2001 US 872939
(43) Date of publication of application: 04.12.2002
(73) Proprietor: Alex Machine Industrial Co., Ltd., Shan-Shang Hsiang, Tainan Hsien (TW)
(72) Inventor: Chen, Chao-Ying, Shan-Shang Hsiang, Tainan Hsien (TW)
(74) Representative: Rees, Alexander Ellison

(56) References cited:
- US-A- 6 068 347
- US-B1- 6 186 598

## Description

The present invention relates to a bicycle wheel, more particularly to a bicycle wheel with spokes that have end portions bent at a small angle to prevent breakage of the spokes.

In U.S. Patent No. 6,186,598, there is disclosed a bicycle wheel according to the preamble of claim 1, comprising a bicycle wheel rim with an H-shaped cross-section. A plurality of hollow packing members are mounted on the wheel rim for reinforcing purposes. The packing members are formed with through holes aligned respectively with spoke mounting holes in the tire retaining walls of the wheel rim to permit installation of spokes on the wheel rim. The spokes have outer end portions mounted on the wheel rim and the packing members, and inner end portions to be mounted on a hub. The outer end portions of the spokes are generally bent by an angle greater than 90°. As such, the spokes are susceptible to breakage. The bicycle wheel thus requires a relative large number of the spokes so as to reduce the stress applied to an individual spoke.

Therefore, the main object of the present invention is to provide a bicycle wheel with spokes that have end portions bent at a small angle to prevent breakage of the spokes.

Accordingly, the bicycle wheel of the present invention is adapted to be installed on a wheel axle, and includes a hub, a wheel rim, and apluralityof spokes. The hub is adapted to be mounted rotatably on the axle, and has left and right end portions which are opposite to each other along an axis of the axle. Each of the left and right end portions is formed with a set of spoke fastening holes which are arranged around the axis of the axle. The wheel rim is disposed around the hub. The wheel rim includes spaced-apart left and right annular tire retaining walls, each of which has a radial inner section proximate to the hub, a radial outer section distal to the hub, and an intermediate section between the radial inner and radial outer sections. The radial outer sections of the tire retaining walls are adapted for retaining a bicycle tire therebetween. The radial inner section of each of the tire retaining walls has a lateral inner surface confronting the radial inner section of another one of the tire retaining walls, and a lateral outer surface opposite to the lateral inner surface. The radial inner section of each of the tire retaining walls is formed with a set of spoke mounting holes, each of which extends through the lateral outer surface and the lateral inner surface of the radial inner section of a respective one of the tire retaining walls . The wheel rim further includes an annular base wall interconnecting the intermediate sections of the tire retaining walls. Each of the spokes has an inner end portion mounted on a respective one of the spoke fastening holes in the left and right end portions of the hub, and an outer end portion mounted on a respective one of the spoke mounting holes in the radial inner section of a respective one of the tire retaining walls . The outer end portion of each of the spokes includes an enlarged head abutting against the lateral outer surface of the radial inner section of a corresponding one of the tire retaining walls, an extending section connected to the enlarged head and received in the respective one of the spoke mounting holes, and a bending section connected to the extending section and disposed adjacent to the lateral inner surface of the radial inner section of the respective one of the tire retaining walls . The bending section is bent from the extending section, and extends from the extending section toward the inner end portion of the spoke.

Other features and advantages of the present invention will become apparent in the following detailed description of the preferred embodiment with reference to the accompanying drawings, of which:
Figure 1 is a side view illustrating a preferred embodiment of a bicycle wheel of the present invention;
Figure 2 is a fragmentary sectional view of the preferred embodiment; and
Figure 3 is a fragmentary partly-sectioned perspective view of the preferred embodiment.

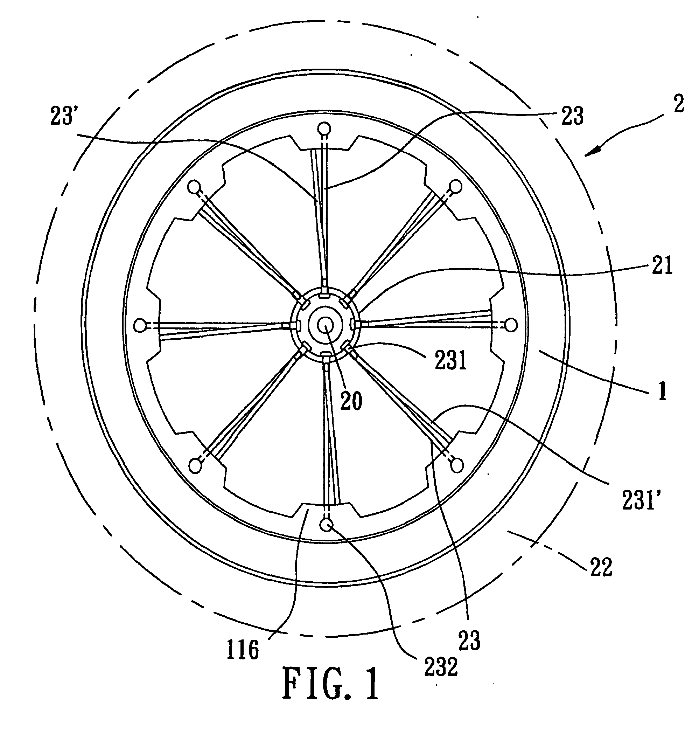

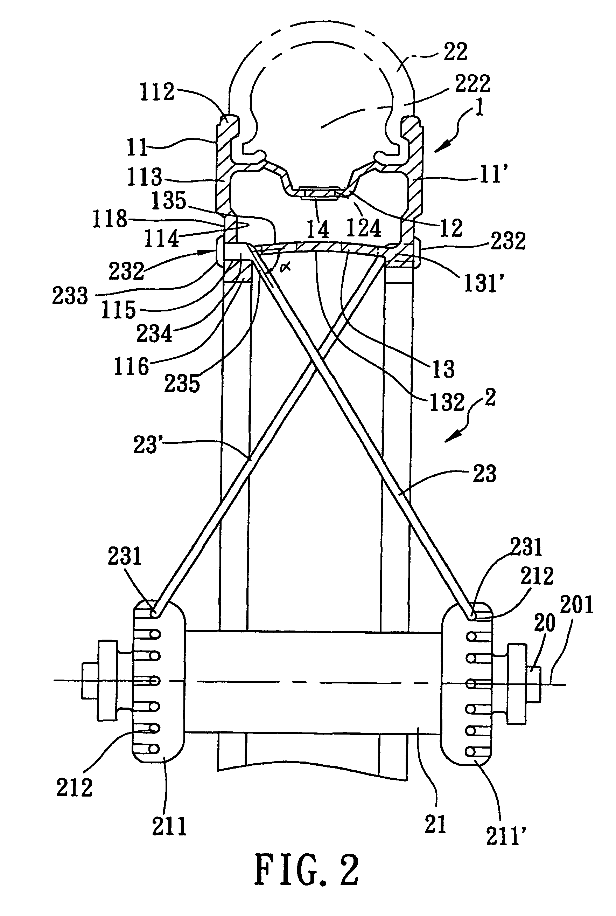

Referring to Figures 1 and 2, the preferred embodiment of the bicycle wheel 2 of the present invention is adapted to be installed on a wheel axle 20, and is shown to include a hub 21 adapted to be mounted rotatably on the axle 20, a wheel rim 1 disposed around the hub 21, and a plurality of spokes 23, 23' for mounting the wheel rim 1 on the hub 21.

The hub 21 is sleeved rotatably and co-axially on the wheel axle 20, and has left and right end portions 211, 211' which are opposite to each other along an axis 201 of the axle 20. Each of the left and right end portions 211, 211' is formed with a set of spoke fastening holes 212 which are arranged around the axis 201 of the axle 20.

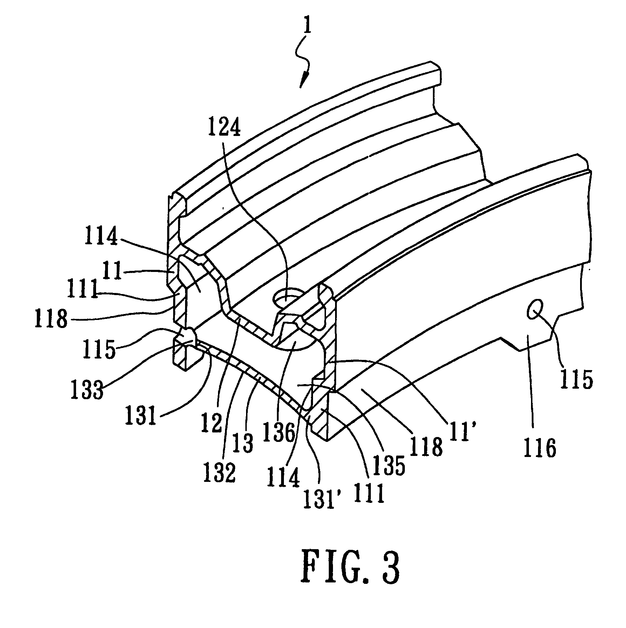

Referring to Figures 2 and 3, the wheel rim 1 includes an integrally formed rim body which has spaced-apart left and right annular tire retaining walls 11, 11', an annular base wall 12 and an annular connecting wall 13. Each of the left and right tire retaining walls 11, 11' has a radial inner section 111 proximate to the hub 21 and to a central point of the wheel rim 1, a radial outer section 112 distal to the hub 21 and to the central point of the wheel rim 1, and an intermediate section 113 between the radial inner and radial outer sections 111, 112. The base wall 12 interconnects the intermediate sections 113 of the left and right tire retaining walls 11, 11'. The radial outer sections 112 of the left and right tire retaining walls 11,11' are adapted for retaining a bicycle tire 22 therebetween. The radial inner section 111 of each of the tire retaining walls 11, 11' has a lateral inner surface 114 confronting the radial inner section 111 of the other one of the tire retaining walls 11, 11', and a lateral outer surface 118 opposite to the lateral inner surface 114. The radial inner section 111 of each of the tire retaining walls 11, 11' is formed with a set of spoke mounting holes 115, each of which extends through the lateral inner surface 114 and the lateral outer surface 118 of the radial inner section 111 of the respective one of the tire retaining walls 11, 11'. The connecting wall 13 interconnects the radial inner sections 111 of the left and right tire retaining walls 11, 11', and has a left terminating end 131 connected to the lateral inner surface 114 of the radial inner section 111 of the left tire retaining wall 11, and a right terminating end 131' connected to the lateral inner surface 114 of the radial inner section 111 of the right tire retaining wall 11'. The connecting wall 13 further has a radial inner surface 132 confronting the hub 21, and a radial outer surface 135 opposite to the radial inner surface 132. Each of the left and right terminating ends 131, 131' of the connecting wall 13 is formed with a set of passage holes 133, each of which is communicated with a respective one of the spoke mounting holes 115 in an adjacent one of the tire retaining walls 11, 11', and each of which is formed through the radial inner surface 132 and the radial outer surface 135 of the connecting wall 13. Each of the tire retaining walls 11, 11' has a plurality of angularly displaced reinforcing projections 116 at a radial inner edge of the tire retaining walls 11, 11'. The reinforcing projections 116 project radially and inwardly relative to the connecting wall 13 and are aligned respectively, in radial directions, with the spoke mounting holes 115 in a respective one of the tire retaining walls 11, 11'.

The bicycle tire 22 is installed on the wheel rim 1 and is retained between the radial outer sections 112 of the tire retaining walls 11, 11'. The bicycle tire 22 is in the form of an outer tire member. After the bicycle tire 22 is mounted on the wheel rim 1, an air-tight air chamber 222 is formed among the radial outer sections 112 and the bicycle tire 22. In order to mount a known valve unit 14 on the wheel rim 1 for inflating the air chamber 222, a valve mounting hole 124 is formed through the base wall 12. In addition, the connecting wall 13 is formed with an access hole 136 registered with the valve mounting hole 124 for access to the latter.

Each of the spokes 23, 23' has an inner end portion 231 mounted on a respective one the spoke fastening holes 212 in the left and right end portions 211, 211' of the hub 21, and an outer end portion 232 mounted on a respective one of the spoke mounting holes 115 in the radial inner section 111 of one of the tire retaining walls 11, 11'. As shown, a first set of the spokes 23 have their outer end portions 232 mounted on the left tire retaining wall 11 of the wheel rim 1, and have their inner end portions 231 mounted on the right end portion 211' of the hub 21. A second set of the spokes 23' have their outer end portions 232 mounted on the right tire retaining wall 11' of the wheel rim 1, and have their inner end portions 231 mounted on the left end portion 211 of the hub 21. The first set of the spokes 23 are staggered with respect to the second set of the spokes 23', as shown in Figure 3. The outer end portion 232 of each of the spokes 23, 23' has an enlarged head 233 abutting against the lateral outer surface 118 of the radial inner section 111 of the respective one of the tire retaining walls 11, 11', an extending section 234 connected immediately to the enlarged head 233 and disposed in the respective one of the spoke mounting holes 115, and a bending section 235 connected immediately to the extending section 234 and disposed adjacent to the lateral inner surface 114 of the radial inner section 111 of the respective one of the tire retaining walls 11, 11'. The bending section 235 extends through an adjacent one of the passage holes 133 in the connecting wall 13 and through the radial inner surface 132 of the connecting wall 13. The bending section 235 extends from the extending section 234 toward the inner end portion 231 of the respective spoke 23, 23'. The bending section 235 of the outer end portion 232 of each of the spokes 23, 23' is bent from the extending section 234 by an angle smaller than 90°.

To install the spokes 23, 23' on the wheel rim 1 and the hub 21, the spokes 23, 23' are extended through the spoke mounting holes 115 in the tire retaining walls 11, 11', respectively, from lateral outer sides toward lateral inner sides of the tire retaining walls 11, 11' such that the spokes 23, 23' extend through the adjacent passage holes 133 in the connecting wall 13 and toward the hub 21 and such that the enlarged heads 233 of the spokes 23, 23' are retained at the lateral outer sides of the tire retaining walls 11, 11'. The inner end portions 231 are extended respectively through the spoke fastening holes 212 in the left and right end portions 211, 211' of the hub 21 and are fastened to the hub 21 with the use of nuts (not shown).

It has thus been shown that, since the bending section 235 of each of the spokes 23, 23' is bent from the extending section 234 by a smaller angle, which is smaller than 90°, the installation of the spokes 23, 23' to the wheel rim 1 and the hub 21 is facilitated. Moreover, the spokes 23, 23' are less susceptible to breakage, when compared with those in the aforementioned prior art. As such, a fewer number of spokes is required in the bicycle wheel of this invention.

## Claims

1. A bicycle wheel (2) adapted to be installed on a wheel axle (20), the bicycle wheel (2) including
a hub (21) adapted to be mounted rotatably on the axle (20), the hub (21) having left and right end portions (211, 211') which are opposite to each other along an axis (201) of the axle (20), each of the left and right end portions (211, 211') being formed with a set of spoke fastening holes (212) which are arranged around the axis (201) of the axle (20),
a wheel rim (1) disposed around the hub (21) and including spaced-apart left and right annular tire retaining walls (11, 11'), each of which has a radial inner section (111) proximate to the hub (21), a radial outer section (112) distal to the hub (21), and an intermediate section (113) between the radial inner and radial outer sections (111, 112), the radial outer sections (112) of the tire retaining walls (11) being adapted for retaining a bicycle tire (22) therebetween, the radial inner section (111) of each of the tire retaining walls (11, 11') having a lateral inner surface (114) confronting the radial inner section (111) of another one of the tire retaining walls (11, 11'), and a lateral outer surface (118) opposite to the lateral inner surface (114), the radial inner section (111) of each of the tire retaining walls (11, 11') being formed with a set of spoke mounting holes (115), each of which extends through the lateral outer surface (118) and the lateral inner surface (114) of the radial inner section (111) of a respective one of the tire retaining walls (11, 11'), the wheel rim (1) further including an annular base wall (12) interconnecting the intermediate sections (113) of the tire retaining walls (11, 11'); and
a plurality of spokes (23, 23'), each of which has an inner end portion (231) mounted on a respective one of the spoke fastening holes (212) in one of the left and right end portions (211, 211') of the hub (21), and an outer end portion (232) mounted on a respective one of the spoke mounting holes (115) in the radial inner section (111) of one of the tire retaining walls (11, 11'),
the outer end portion (232) of each of the spokes (23, 23') including an enlarged head (233), an extending section (234) connected to the enlarged head (233) and received in the respective one of the spoke mounting holes (115), and a bending section (235) connected to the extending section (234), the bending section (235) being bent from the extending section (234) and extending from the extending section (234) toward the inner end portion (231) of the spoke (23, 23'), **characterized in that**: the enlarged head (233) abuts against the lateral outer surface (118) of the radial inner section (111) of a corresponding one of the tire retaining walls (11, 11') and the bending section (235) is disposed adjacent to the lateral inner surface (114) of the radial inner section (111) of the corresponding one of the tire retaining walls (11, 11').

2. The bicycle wheel (2) as claimed in Claim 1, further **characterized in that** the bending section (235) of each of the spokes (23, 23') is bent from the extending section (234) by an angle smaller than 90°.

3. The bicycle wheel (2) as claimed in Claim 1, further **characterized in that** the wheel rim (1) includes an annular connecting wall (13) interconnecting the radial inner sections (111) of the tire retaining walls (11, 11'), the connecting wall (13) having a left terminating end (131) which is connected to the lateral inner surface (114) of the radial inner section (111) of the left tire retaining wall (11), and a right terminating end (131') which is connected to the lateral inner surface (114) of the radial inner section (111) of the right tire retaining wall (11'), the connecting wall (13) further having a radial inner surface (132) confronting the hub (21), each of the left and right terminating ends (131, 131')of the connecting wall (13) being formed with a set of passage holes (133) which are communicated respectively with the spoke mounting holes (115) in an adjacent one of the left and right tire retaining walls (11, 11') and which are formed through the radial inner surface (132) of the connecting wall (13), the bending section (235) of each of the spokes (23, 23') extending through a respective one of the passage holes (133) in the connecting wall (13).

4. The bicycle wheel (2) as claimed in Claim 3, further **characterized in that** each of the tire retaining walls (11, 11') is formed with a plurality of reinforcing projections (116) which project radially and inwardly relative to the connecting wall (13) and which are aligned respectively, in radial directions, with the spoke mounting holes (115) in a respective one of the tire retaining walls (11, 11').

5. The bicycle wheel (2) as claimed in Claim 1, further **characterized in that** the outer end portions (232) of a first set of the spokes (23) are mounted on the spoke mounting holes (115) in the left tire retaining wall (11), the inner end portions (231) of the first set of the spokes (23) being mounted on the spoke fastening holes (212) in the right end portion (211') of the hub (21), the outer end portions (232) of a second set of the spokes (23') being mounted on the spoke mounting holes (115) in the right tire retaining wall (11'), the inner end portions (231) of the second set of the spokes (23') being mounted on the spoke fastening holes (212) in the left end portion (211) of the hub (21).

6. The bicycle wheel (2) as claimed in Claim 5, further **characterized in that** the first set of the spokes (23) are staggered with respect to the second set of the spokes (23').

## Patentansprüche

1. Fahrradrad (2) angepasst zur Installation auf einer Radachse (20), das Fahrradrad (2) umfassend
eine Nabe (21) angepasst zur drehbaren Montage auf der Achse (20), die Nabe (21) verfügt über linke und rechte Endabschnitte (211, 211'), die einander entlang einer Mittellinie (201) der Achse (20) gegenüber liegen, wobei jeder der linken und rechten Endabschnitte (211, 211') mit einem Satz von Speichenbefestigungsöffnungen (212) ausgebildet ist, die um die Mittellinie (201) der Achse (20) angeordnet sind,
eine Radfelge (1), angeordnet um die Nabe (21) und umfassend mit Zwischenraum angeordnete linke und rechte ringförmige Reifenhaltewände (11, 11'), von denen jede einen radialen inneren Abschnitt (111) nahe zur Nabe (21), einen radialen äußeren Abschnitt (112) entfernt von der Nabe (21) und einen Zwischenabschnitt (113) zwischen den radialen inneren und radialen äußeren Abschnitten (111, 112) aufweist, wobei die radialen äußeren Abschnitte (112) der Reifenhaltewände (11) zum Halten eines Fahrradreifens (22) dazwischen ausgebildet sind, der radiale innere Abschnitt (111) jeder der Reifenhaltewände (11, 11') eine laterale innere Oberfläche (114), die dem radialen inneren Abschnitt (111) einer anderen der Reifenhaltewände (11, 11') gegenübersteht, und eine laterale äußere Oberfläche (118) gegenüber der lateralen inneren Oberfläche (114) aufweist, der radiale innere Abschnitt (111) jeder der Reifenhaltewände (11, 11') mit einem Satz von Speichenmontageöffnungen (115) ausgebildet ist, von denen jede sich durch die laterale äußere Oberfläche (118) und die laterale innere Oberfläche (114) des radialen inneren Abschnitts (111) einer entsprechenden der Reifenhaltewände (11, 11') erstreckt, die Radfelge (1) weiterhin eine ringförmige Basiswand (12) umfasst, die die Zwischenabschnitte (113) der Reifenhaltewände (11, 11') miteinander verbindet; und
eine Mehrzahl von Speichen (23, 23'), von denen jede einen inneren Endabschnitt (231), der an einen entsprechenden der Speichenbefestigungsöffnungen (212) in einem der linken und rechten Endabschnitte (211, 211') der Nabe (21) montiert ist, und einen äußeren Endabschnitt (232), der an einen entsprechenden der Speichenmontageöffnungen (115) im radialen inneren Abschnitt (111) einer der Reifenhaltewände (11, 11') montiert ist, aufweist,
der äußere Endabschnitt (232) jeder der Speichen (23, 23') einen vergrößerten Kopf (233), einen Erweiterungsabschnitt (234), der mit dem vergrößerten Kopf (233) verbunden ist und im entsprechenden einer der Speichenmontageöffnungen (115) aufgenommen wird, und einen Biegungsabschnitt (235), der mit dem Erweiterungsabschnitt (234) verbunden ist, aufweist, wobei der Biegungsabschnitt (235) vom Erweiterungsabschnitt (234) gebogen ist und sich vom Erweiterungsabschnitt (234) zum inneren Endabschnitt (231) der Speiche (23, 23') erstreckt, **dadurch gekennzeichnet, dass**: der vergrößerte Kopf (233) gegen die laterale äußere Oberfläche (118) des radialen inneren Abschnitts (111) einer korrespondierenden der Reifenhaltewände (11, 11') stößt und der Biegungsabschnitt (235) benachbart zur lateralen inneren Oberfläche (114) des radialen inneren Abschnitts (111) der korrespondierenden der Reifenhaltewände (11, 11') angeordnet ist.

2. Das Fahrradrad (2) nach Anspruch 1, weiter **dadurch gekennzeichnet, dass** der Biegungsabschnitt (235) von jedem der Speichen (23, 23') vom Erweiterungsabschnitt (234) um einen Winkel kleiner als 90° gebogen ist.

3. Das Fahrradrad (2) nach Anspruch 1, weiter **dadurch gekennzeichnet, dass** die Radfelge (1) eine ringförmige Verbindungswand (13)aufweist, die die radialen inneren Abschnitte (111) der Reifenhaltewände (11, 11') verbindet, wobei die Verbindungswand (13) ein linkes Abschlussende (131), das mit der lateralen inneren Oberfläche (114) des radialen inneren Abschnitts (111) der linken Reifenhaltewand (11) verbunden ist, und ein rechtes Abschlussende (131'), das mit der lateralen inneren Oberfläche (114) des radialen inneren Abschnitts (111) der rechten Reifenhaltewand (11') verbunden ist, aufweist, die Verbindungswand (13) weiterhin eine radiale innere Oberfläche (132), die der Nabe (21) gegenübersteht, aufweist, jede der linken und rechten Abschlussenden (131, 131') der Verbindungswand (13) mit einem Satz von Durchgangsöffnungen (133) ausgebildet ist, die entsprechend mit den Speichenmontageöffnungen (115) in einer benachbarten der linken und rechten Reifenhaltewände (11, 11') kommunizieren und die durch die radiale innere Oberfläche (132) der Verbindungswand (13) gebildet sind, der Biegungsabschnitt (235) jeder der Speichen (23, 23') sich durch eine entsprechende der Durchgangsöffnungen (133) in der Verbindungswand (13) erstreckt.

4. Das Fahrradrad (2) nach Anspruch 3, weiter **dadurch gekennzeichnet, dass** jede der Reifenhaltewände (11, 11') mit einer Mehrzahl von Verstärkungsprojektionen (116) ausgebildet ist, die radial und nach innen relativ zur Verbindungswand (13) ragen und die jeweils in radialen Richtungen mit den Speichenmontageöffnungen (115) in einem entsprechenden der Reifenhaltewänden (11, 11') ausgerichtet sind.

5. Das Fahrradrad (2) nach Anspruch 1, weiter **dadurch gekennzeichnet, dass** die äußeren Endabschnitte (232) eines ersten Satzes von Speichen (23) an den Speichenmontageöffnungen (115) in der linken Reifenhaltewand (11) montiert sind, die inneren Endabschnitte (231) des ersten Satzes der Speichen (23) an den Speichenbefestigungsöffnungen (212) im rechten Endabschnitt (211') der Nabe (21) montiert sind, die äußeren Endabschnitte (232) eines zweiten Satzes der Speichen (23') an den Speichenmontageöffnungen (115) in der rechten Reifenhaltewand (11') montiert sind, die inneren Endabschnitte (231) des zweiten Satzes der Speichen (23') an den Speichenbefestigungsöffnungen (212) im linken Endabschnitt (211) der Nabe (21) montiert sind.

6. Das Fahrradrad (2) nach Anspruch 5, weiter **dadurch gekennzeichnet, dass** der erste Satz der Speichen (23) in Bezug auf den zweiten Satz der Speichen (23') versetzt ist.

## Revendications

1. Roue de bicyclette (2), adaptée à une installation sur un essieu de roue (20), la roue de bicyclette (2) comprenant
un moyeu (21) adapté à un montage de manière rotative sur l'essieu (20), le moyeu (21) ayant des portions d'extrémité gauche et droite (211, 211') qui sont opposées l'une à l'autre le long d'un axe (201) de l'essieu (20), chacune des portions d'extrémité gauche et droite (211, 211') étant formées avec un jeu de trous d'attaches de rayon (212) qui sont arrangés autour de l'axe (201) de l'essieu (20),
une jante de roue (1), disposée autour du moyeu (21) et comprenant des parois de maintien de pneumatique annulaires gauche et droite, espacées l'une de l'autre (11, 11'), dont chacune d'elles a une section interne radiale (111) à proximité du moyeu (21), une section externe radiale (112), distale par rapport au moyeu (21), et une section intermédiaire (113) entre les sections interne radiale et externe radiale (111, 112), les sections externes radiales (112) des parois de maintien de pneumatique (11) étant adaptées au maintien entre elles d'un pneumatique de bicyclette (22), la section interne radiale (111) de chacune des parois de maintien de pneumatique (11, 11') ayant une surface interne latérale (114) confrontant la section interne radiale (111) d'une autre des parois de maintien de pneumatique (11, 11'), et une surface externe latérale (118) opposée à la surface latérale interne (114), la section interne radiale (111) de chacune des parois de maintien de pneumatique (11, 11') étant formée d'un jeu de trous de montage de rayon (115), dont chacun se prolonge à travers la surface externe latérale (118) et la surface interne latérale (114) de la section interne radiale (111) d'une paroi respective des parois de maintien de pneumatique (11, 11'), la jante de roue (1) comprenant en outre une paroi de base annulaire (12), interconnectant les sections intermédiaires (113) des parois de maintien de pneumatique (11, 11'); et
une pluralité de rayons (23, 23'), dont chacun a une portion d'extrémité interne (231) montée sur un trou respectif des trous d'attache de rayon (212) dans l'une des portions d'extrémité gauche ou droite (211, 211') du moyeu (21), et une portion d'extrémité externe (232) montée sur un trou respectif des trous de montage de rayon (115) dans la section interne radiale (111) de l'une des parois de maintien de pneumatique (11, 11'),
la portion d'extrémité externe (232) de chacun des rayons (23, 23'), y compris une tête agrandie (233), une section se prolongeant (234) connectée à la tête agrandie (233) et reçue dans l'un des trous respectifs de montage de rayon (115), et une section de flexion (235), connectée à la section se prolongeant (234), la section de flexion (235) étant fléchie à partir de la section se prolongeant (234) et se prolongeant de la section se prolongeant (234) vers la portion d'extrémité interne (231) du rayon (23, 23'), **caractérisé en ce que** la tête agrandie (233) bute contre la surface externe latérale (118) de la section interne radiale (111) d'une paroi correspondante des parois de maintien de pneumatique (11, 11') et la section de flexion (235) est disposée de manière adjacente à la surface interne latérale (114) de la section interne radiale (111) de la paroi correspondante des parois de maintien de pneumatique (11, 11').

2. Roue de bicyclette (2) selon la revendication 1, **caractérisée, en outre, en ce que** la section de flexion (235) de chacun des rayons (23, 23') est fléchie à partie de la section se prolongeant (234) par un angle inférieure à 90°.

3. Roue de bicyclette (2) selon la revendication 1, **caractérisée, en outre, en ce que** la jante de roue (1) comprend une paroi de connexion annulaire (13) interconnectant les sections internes radiales (111) des parois de maintien de pneumatique (11, 11'), la paroi de connexion (13) ayant une extrémité terminale gauche (131) qui est connectée à la surface interne latérale (114) de la section interne radiale (111) de la paroi de maintien de pneumatique gauche (11), et une extrémité terminale droite (131') qui est connectée à la surface interne latérale (114) de la section interne radiale (111) de la paroi de maintien de pneumatique droite (11'), la paroi de connexion (13) ayant en outre une surface interne radiale (132) confrontant le moyeu (21), chacune des extrémités terminales gauche et droite (131, 131') de la paroi de connexion (13) étant formée avec un jeu de trous de passage (133) qui sont en communication respectivement avec les trous de montage de rayon (115) dans une paroi adjacente aux parois de maintien de pneumatique gauche et droite (11, 11') et qui sont formées à travers la surface interne radiale (132) de la paroi de connexion (13), la section de flexion (235) de chacun des rayons (23, 23') se prolongeant à travers un trou respectif des trous de passage (133) dans la paroi de connexion (13).

4. Roue de bicyclette (2) selon la revendication 3, **caractérisée, en outre, en ce que** chacune des parois de maintien de pneumatique (11, 11') est formée avec une pluralité de projections de renforcement (116) qui font saillie de manière radiale et vers l'intérieur par rapport à la paroi de connexion (13) et qui sont alignées respectivement, dans des directions radiales, avec les trous de montage de rayon (115) dans une paroi respective des parois de maintien de pneumatique (11, 11').

5. Roue de bicyclette (2) selon la revendication 1, **caractérisée, en outre, en ce que** les portions d'extrémité externes (232) d'un premier jeu de rayons (23) sont montées sur les trous de montage de rayon (115) dans la paroi de maintien de pneumatique gauche (11), les portions d'extrémité internes (231) du premier jeu des rayons (23) étant montées sur les trous d'attache de rayon (212) dans la portion d'extrémité droite (211') du moyeu (21), les portions d'extrémité externes (232) d'une deuxième jeu des rayons (23') étant montées sur les trous de montage de rayon (115) dans la paroi de maintien de pneumatique droite (11'), les portions d'extrémité internes (231) du deuxième jeu des rayons (23') étant montées dans les trous d'attache de rayon (212) dans la portion d'extrémité gauche (211) du moyeu (21).

6. Roue de bicyclette selon la revendication 5, **caractérisée, en outre, en ce que** le premier jeu des rayons (23) est décalé par rapport au deuxième jeu des rayons (23').
